# EUROPEAN PATENT SPECIFICATION

(11) **EP 1 213 173 B1**
(45) Date of publication and mention of the grant of the patent: **23.01.2008**
(21) Application number: 01204702.3
(22) Date of filing: 06.12.2001
(51) Int. Cl.: B60K 15/035

(54) **A system for recovering fuel vapours from a motor-vehicle tank, and a evaporator unit therefor**
System zur Rückgewinnung von Kraftstoffdämpfen aus einem Kraftfahrzeugtank und Verdampfer dafür
Système de récupération de vapeurs de carburant d'un réservoir d' automobile et évaporateur pour un tel système

(30) Priority: 11.12.2000 IT TO001147
(43) Date of publication of application: 12.06.2002
(73) Proprietor: Ergom Automotive S.p.A., 10071 Borgaro Torinese (Torino) (IT)
(72) Inventor: Cimminelli, Francesco, 10143 Torino (IT); Castagneri, Giulio, 10076 Nole (Torino) (IT); Lobascio, Osvaldo, 10078 Venaria Reale (Torino) (IT); Bussi, Giuseppe, 10049 Torino (IT)
(74) Representative: Cian, Paolo

(56) References cited:
- EP-A- 1 020 670
- WO-A-00/73644
- DE-A- 2 019 736
- GB-A- 2 238 041
- US-A- 5 782 258

## Description

The present invention relates to a system for recovering fuel vapours from a motor-vehicle tank, comprising an evaporator unit communicating with the inside of the tank through service ducts.

EP-A-1020670 discloses a system of the type defined above, having a venting system which comprises a capacity and a valve unit which are arranged very close to each other and are connected by a service duct arranged above the upper wall of the tank

In known systems for recovering fuel vapours, an evaporator unit is not always provided. Its presence in fact can be avoided in the case in which an intake of an activated carbon trap (also called "carbon canister") for vapours coming from the tank, is arranged up enough with respect to the tank that any possibility that the liquid fuel can reach the activated carbon trap is prevented. Instead, when an evaporator unit is used, that is in the case of a system of the type defined above, it usually consists of a hollow body having the function of collector of vapours coming from different zones of the tank, and it is arranged at a position which is normally remote from the tank itself, for example adjacent to the filler pipe for filling the tank, at any rate in a free space of a zone under the motor-vehicle body, which is above with respect to the tank. Since the evaporator unit body must be connected with the inside of the tank by means of service ducts, these ducts extend out of the tank.

In such a way, the service ducts and the evaporator unit constitute elements of the system for recovering fuel vapours, which are made independently from the tank and which have to be mounted separately from the tank with a resulting increase of the manufacturing costs of the motor-vehicle.

Moreover, each of these elements, because of the unavoidable leaks due to permeability of the fabrication material, constitutes a source of loss of fuel vapours in the atmosphere.

In order to avoid these drawbacks, the subject of the invention is a system having the features set forth in claim 1.

By virtue of such solution, the system for recovering vapours according to the invention, can be made in an extremely compact manner and therefore it can be associated directly to the tank before the assembly of the latter on the motor-vehicle body, so that the operations needed for its assembly on the motor-vehicle are reduced to the minimum.

According to a preferred feature of the invention, the evaporator unit body is rigidly connected to the upper wall of the tank.

In this way, the evaporator unit forms a single body with the tank and, advantageously, a portion of it can be made integrally with the upper wall of the tank itself.

According to a further preferred feature of the invention, the service ducts are associated to the face of the upper wall of the tank facing the inside of the tank itself.

In such a way, any possibility that vapours coming out from the material constituting the service ducts may be discharged in the outside environment, owing to its permeability, can be totally eliminated since the vapours remain at any rate confined inside the tank.

Further characteristics of the invention will become more evident from the detailed description which follows, given purely by way of example, reference being made to the appended drawings, in which:
Figure 1 is a schematic top elevational view of the upper wall of a motor-vehicle fuel tank provided with a system according to the invention,
Figure 2 is a sectional view taken along the line II-II of Figure 1,
Figure 3 is a sectional view taken along the line III-III of Figure 1,
Figure 4 is a sectional view taken along the line IV-IV of Figure 1,
Figure 5 is an enlarged view of a detail indicated by the arrow V in Figure 3,
Figure 6 is an enlarged top elevational view of a detail indicated by the arrow VI in Figure 3,
Figure 7 is a view similar to that of Figure 1, of a modification of the invention,
Figure 8 is a sectional view taken along the line VIII-VIII of Figure 7,
Figure 9 is a sectional view taken along the line IX-IX of Figure 7,
Figure 10 is a sectional view taken along the line X-X of Figure 7, and
Figure 11 is an enlarged view of a detail indicated by the arrow XI in Figure 8.

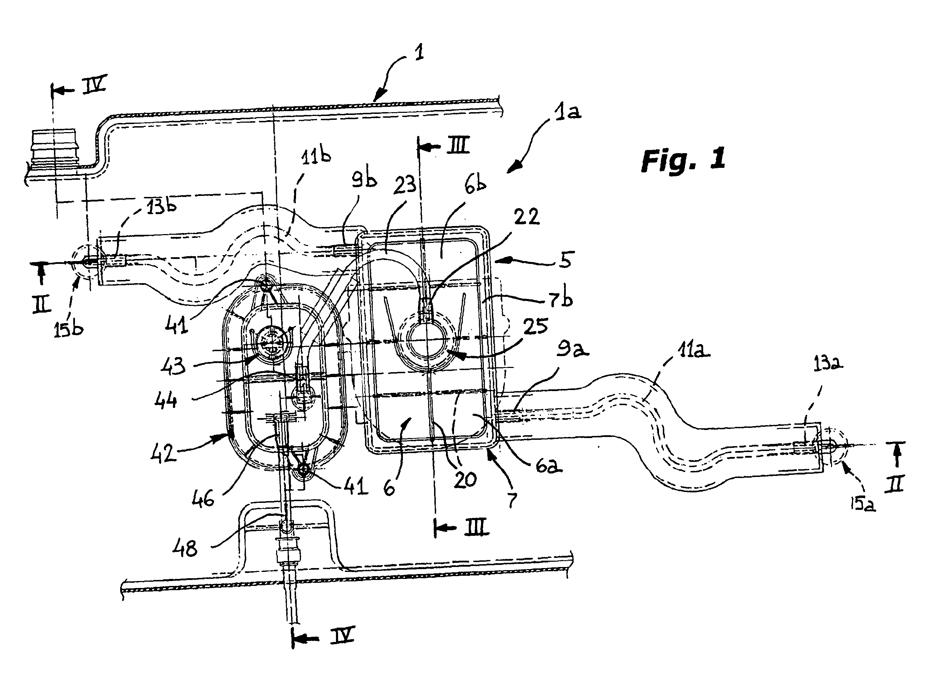

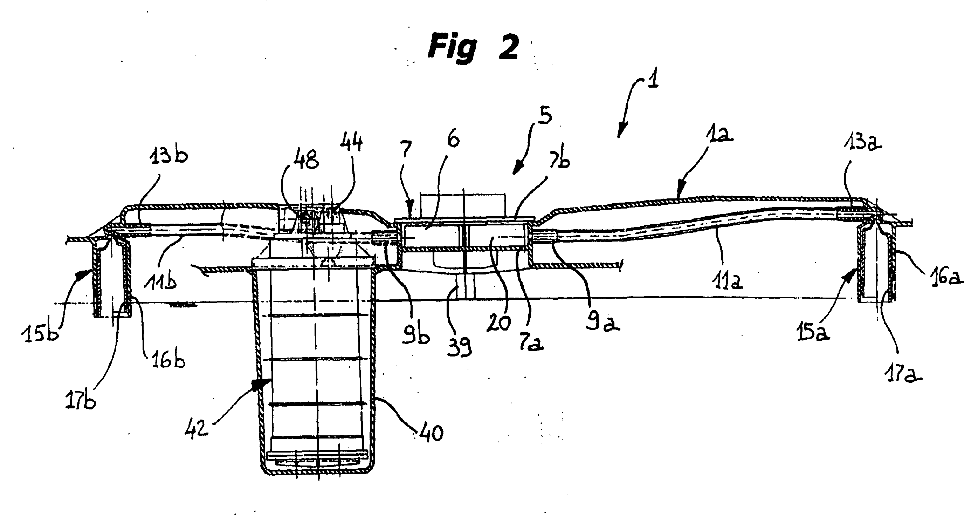

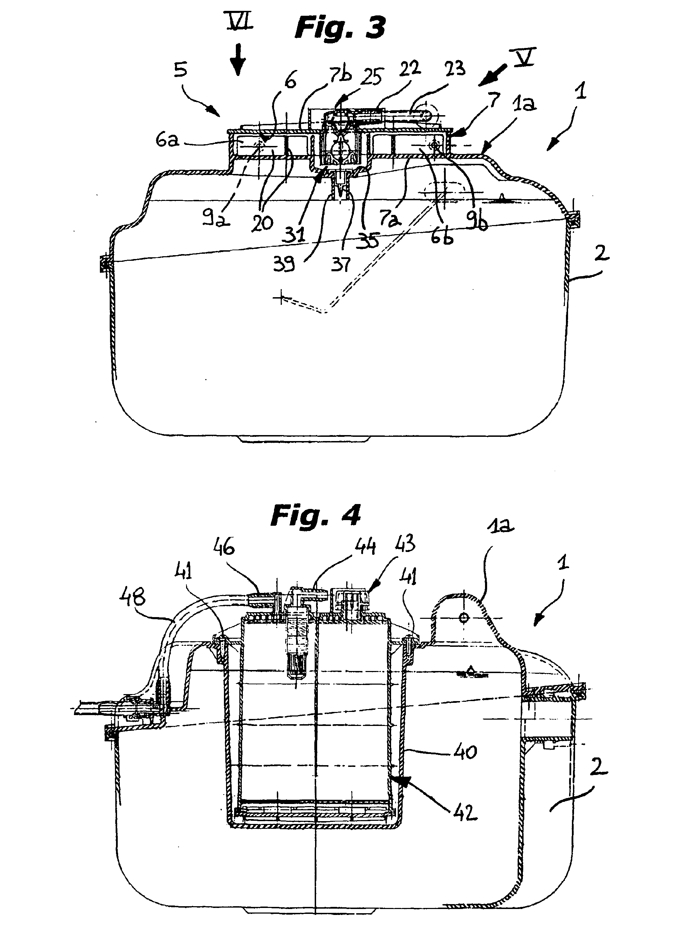

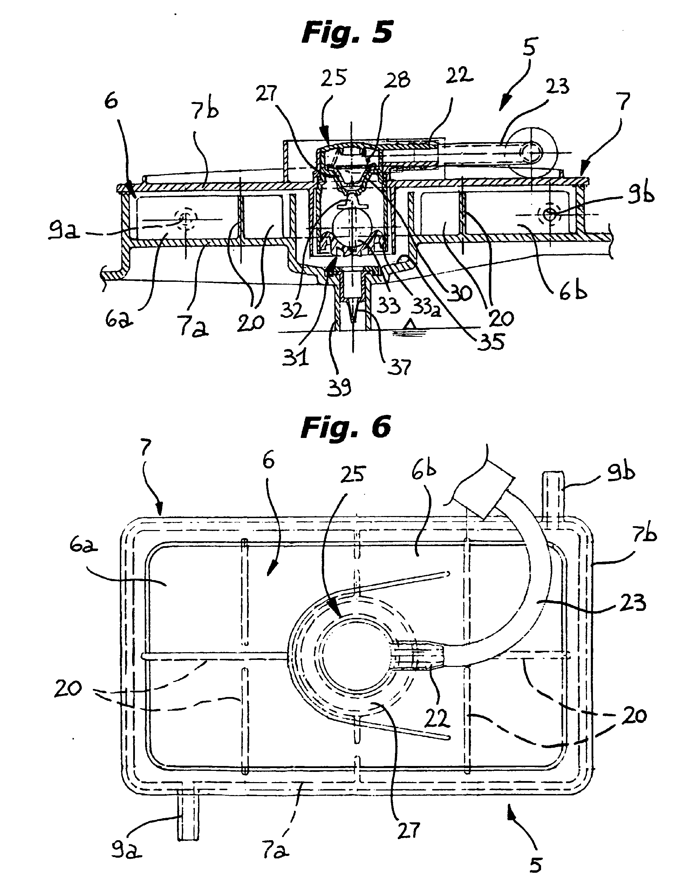

Referring first to Figures 1 to 6, a motor-vehicle fuel tank is generally indicated by reference numeral 1. The tank 1 is preferably constituted by a pair of plastic material half-shells, typically obtained as a result of moulding or thermoforming operations known per se, which are joined to each other in the region of a pair of respective flanges and fixed in a manner known per se, for example by welding.

The upper half-shell of the tank 1, which is intended to be sealingly connected with a respective lower half-shell 2, has an upper wall 1a to which an evaporator unit indicated 5 is associated.

The evaporator unit 5 has a flat hollow body 7 comprising a lower pan-shaped portion 7a and an upper portion or cover 7b. A decantation chamber 6 is defined between the portions 7a and 7b, which is divided for example into two auxiliary adjacent chambers 6a and 6b communicating with each other, fuel vapours coming from the inside of the tank 1 being admitted in the chamber 6.

The portion 7a of the body of the unit 5 is preferably formed integrally with the upper wall 1a of the tank 1, in proximity of a central zone of such a wall.

Fuel vapours contained in the tank 1 can reach the chamber 6 through a pair of service ducts 11a, 11b each of which has one of its opposite ends fitted on a respective pipe fitting 9a, 9b, such pipe fittings being formed integrally with the lower portion 7a and being arranged under the wall 1a, that is inside of the tank 1. The other end of the ducts 11a and 11b is preferably inserted on a respective pipe fitting 13a, 13b, each of which is conveniently associated to a respective on-off float valve 15a, 15b.

The valves 15a and 15b, when they are provided, are in particular arranged at opposite zones with respect to the unit 5 and spaced therefrom, for example aligned along an horizontal axis passing through the unit 5 and inclined with respect to a general longitudinal axis of the body of the motor-vehicle on which the tank 1 will be mounted. In this way, when the motor-vehicle slant, one of the two float valves can close while the other remains open. Of course, in the case in which the on-off float valves are more than two, for example three, the service ducts will be corresponding in number, as well as the pipes for fitting with the portion 7a, and the auxiliary chambers of the body 7.

Conveniently, the pipe fittings 13a, 13b are integrally formed with the upper wall 1a as well as the tubular body 16a, 16b of each of the on-off valves, each of such bodies being intended to slidably support a respective float 17a, 17b adapted to undergo an axial movement along the axis of the respective body 16a, 16b in consequence of the contact of the bottom of the float with the free surface of the fuel contained into the tank 1.

A plurality of transversal plates 20 extend in the chamber 6, in order to define a tortuous path for the fuel vapours between the openings of the pipe fittings 9a, 9b. The provision of the plates 20 allows, on the one hand, to interpose obstacles along the way of the vapours so as to facilitate fuel drops dispersed into the vapours to drop towards the bottom of the chamber 6, and, on the other hand, to increase the internal exchange surface of the chamber 6 in order to promote the evaporation of the liquid fuel which is present in the chamber 6.

A pipe 22 adapted to be connected with a delivery duct 23 is then integrally formed on the cover 7b, to allow the delivery of vapours from the chamber 6 towards an activated carbon trap 42 that will be described in further detail in the following.

A vent valve 25 known per se, for example of the type described in the European application EP-A-853 014 in the name of the same Applicant, is associated to the cover 7b of the hollow body 7. To sumarize, the vent valve 25 comprises a movable cup-shaped valve member 27, provided with a calibrated hole in its bottom, which is urged by means of a coil spring 28 against a circular valve member formed on the top of a conical body 30 which also has a hole in its bottom.

A roll-over safety valve 31 is conveniently provided below the vent valve 25, which is also of a type known per se and described for example in the aforesaid European application, which constitutes a so-called "multifunctional" valve together with the vent valve 25. In short, the roll-over safety valve 31 comprises a conical pin valve member 32 arranged like a hat on a movable metallic ball 33 and intended to cooperate with a respective valve seat defined by the hole formed at the bottom of the conical body 30. The ball 33 rests on a support body 33a in the region of an almost hemispherical or conical seat of it, in such a way that, as a result of an inclination of the tank 1, the ball 33 tends to move with respect to its rest position on the seat of the body 33a, bringing the valve member 32 into engagement with the valve seat of the bottom of the conical body 30, and closing therefore the passage towards the pipe 22 and the delivery duct 23.

A hollow collection seat 35 is formed below the "multifunctional" valve constituted by the vent valve 25 and the safety valve 31, for collecting the liquid fuel dispersed in the vapour admitted into the chamber 6. In the region of the bottom of the seat 35, there is arranged a "goose-beak" relief valve 37 of a type known per se and provided with a pair of flexible lips usually being in a mating configuration in which the valve 37 is closed. When over-pressure conditions occur upstream the valve 37, owing to the thrust exerted by a determined amount of liquid fuel, the lips of the valve 37 open in order to allow the fuel to drop towards the inside of the tank 1.

Advantageously, the "goose-beak" relief valve 37 extends inside a tubular duct 39 integrally formed with the portion 7a, whose axial extension is greater than that of the valve 37, in such a way to prevent the fuel contained in the tank 1 from coming directly into contact with the valve 37, in order to prevent the fuel from flowing back accidentally to the inside of the body 7 through the valve 37.

A hollow bell-shaped seat 40 is formed in the upper wall 1a of the tank 1 beside the evaporator unit 7, whose concavity faces the outside of the tank 1. The hollow seat 40 is intended to sealingly receive an activated carbon trap 42, or "carbon canister", whose housing is fixed to the wall 1a by connection means known per se, for example by a plurality of screws 41. The housing of the trap 42 has at its top, in a manner known per se, a tubular pipe fitting 44 intended to be engaged by an end of the delivery duct 23, a washing air intake 43 and a delivery pipe fitting 46 for connection with a pipe 48 for feeding fuel vapours to the motor-vehicle engine, typically to the induction manifold of the engine.

By virtue of the above described structure of the system for recovering fuel vapours, the elements thereof are made integrally with an upper wall of the tank 1 or directly associated thereto, whereby the tank 1 can be mounted on the motor-vehicle when it is already complete with its system for recovering vapours, thus avoiding the need to provide any zone of the motor-vehicle body which is adapted for supporting the various elements of the system, as well as to carry out the associated assembly operations. Moreover, thanks to the fact that the service ducts 11a and 11b extend inside the tank 1, the possibility that vapours coming out from these ducts and from respective pipe fittings be discharged in the outside environment, is eliminated.

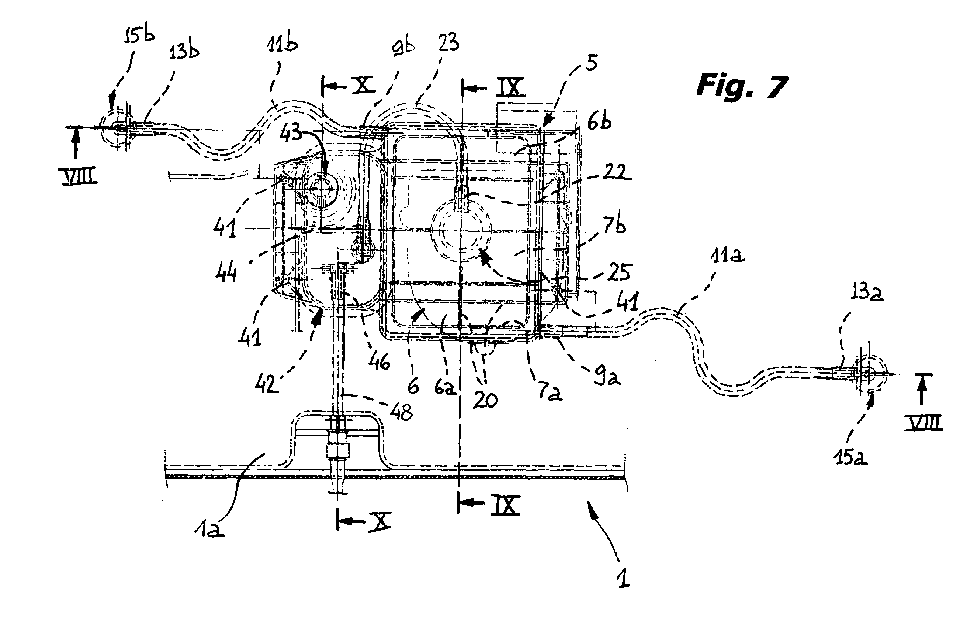

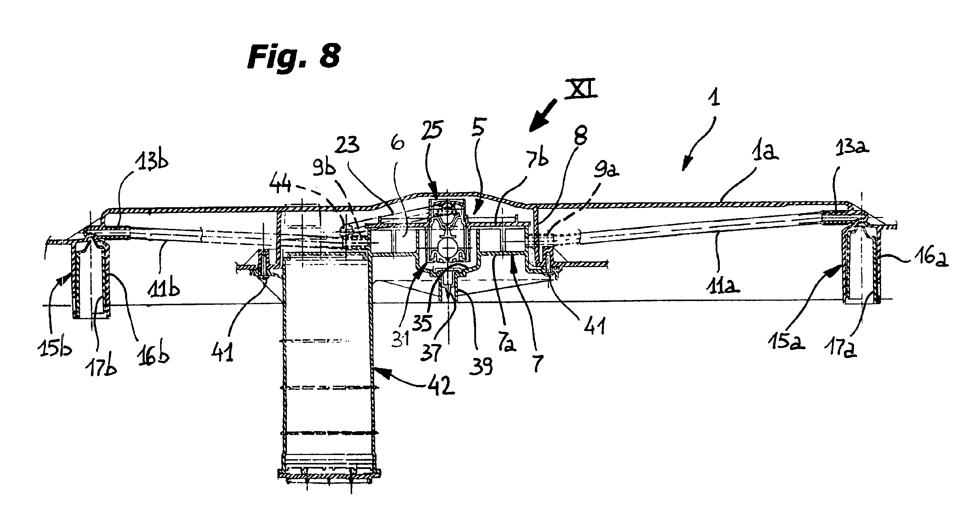

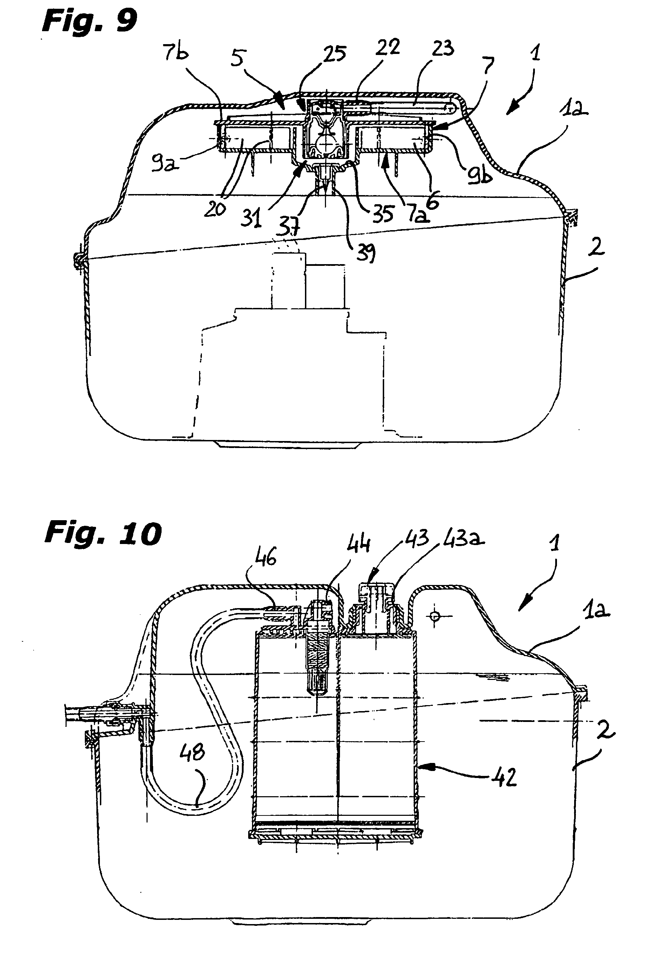

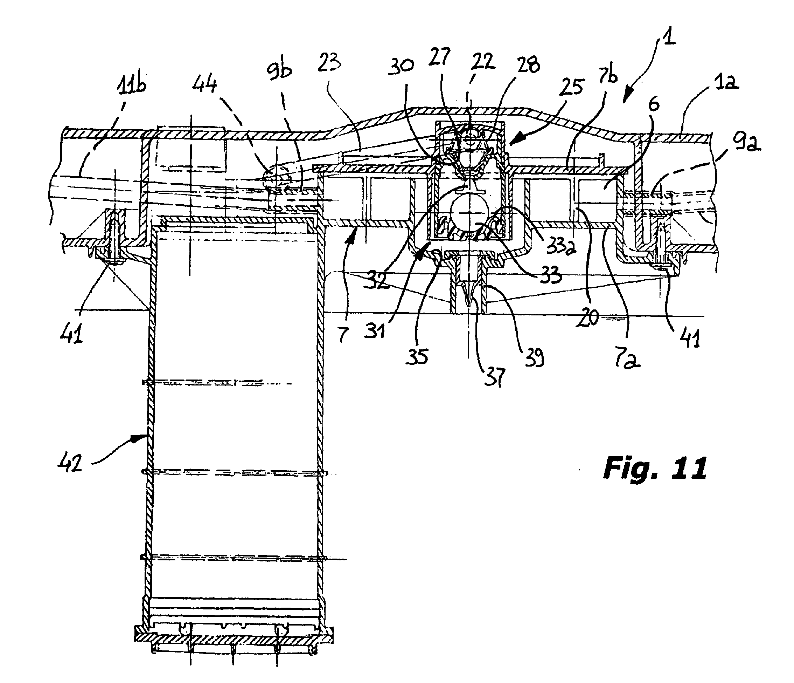

A modification of the invention is illustrated in Figures 7 to 11, in which elements equal or similar to those of the previously described embodiment have been indicated with the same reference numerals. According to this modification, in which the parts that are not explicitly described substantially coincide with those of the previous embodiment, the system for recovering fuel vapours from the tank is practically all contained within the tank itself.

In particular, the body 7 of the evaporator unit 5 is suspended from the upper wall 1a of the tank 1 on the side of its face facing the inside of the tank, and it is fixed by screws 41 or other fixing means, known per se, to a support structure 8 associated to the upper wall 1a and preferably formed in one piece with it.

As in the previously described embodiment, the hollow body 7 comprises a lower portion 7a and an upper portion or cover 7b which are made separately in order to allow the assembly of the inner elements of the body 7, and are coupled to each other, preferably in a sealed manner. Conveniently, the housing which receives the activated carbon trap 42, is in this case made integrally with the lower portion 7a of the hollow body 7, the unit formed by the portion 7a and by the housing of the trap 42 being fixed by screws 41 to the support structure 8.

In this case, an opening 43a is formed in the upper wall 1a of the tank 1, for allowing the passage of the washing air intake 43 of the activated carbon trap 42 which needs an outlet towards the outside of the tank, while all the other parts of the system for recovering vapours remain confined within the tank 1.

By virtue of the structure of the system for recovering vapours according to this modification of the invention, the system is able to eliminate in an almost total way any possibility that fuel vapours may leak outside of the tank 1, since all the elements of the system, including the service ducts 11a, 11b, the delivery duct 23 and the pipe 48 for feeding fuel vapours to the engine, are arranged within the tank.

## Claims

1. A system for recovering fuel vapours from a motor-vehicle tank, comprising an evaporator unit (5) having a hollow body (7) which is associated to an upper wall (1a) of the tank (1) and communicates with the inside of the tank (1) through service ducts (11a, 11b),
**characterized in that** said service ducts (11a, 11b) enable the communication of the inside of the body (7) of the evaporator unit (5) with zones of the tank (1) which are remote from the evaporator unit (5), and **in that** said service ducts (11a, 11b) are arranged inside the tank (1) under its upper wall (1a).

2. A system according to claim 1, **characterized in that** an on-off float valve (15a, 15b) is associated to said service ducts (11a, 11b).

3. A system according to claim 1 or 2, **characterized in that** the body (7) of the evaporator unit (5) has a generally flat shape which defines decantation chamber (6) in which at least a service duct (11a, 11b) communicating with the inside of the tank (1) opens, wherein the hollow body (7) comprises a vent valve (25) interposed between the decantation chamber (6) and a delivery duct (23) communicating with an activated carbon trap (42).

4. A system according to claim 3, **characterized in that** a roll-over safety valve (31) is associated to the vent valve (25).

5. A system according to claim 3 or 4, **characterized in that** the evaporator unit (5) comprises a lower portion (7a) and an upper portion (7b) coupled to each other, the lower part (7a) of the hollow body (7) comprising a seat (35) for collecting fuel in the liquid state, said seat (35) being arranged above a valve device (37) for feeding back the liquid fuel towards the inside of the tank (1).

6. A system according to any of claims 3 to 5, **characterized in that** the decantation chamber (6) comprises at least two auxiliary chambers in each of which at least a respective service duct (11a, 11b) communicating with the inside of the tank (1) opens.

7. A system according to claim 6, **characterized in that** each auxiliary chamber (6a, 6b) has a plurality of transversal plates (20) adapted to define a tortuous path for the vapours between an associated service duct (11a, 11b) and said vent valve (25), and in order to promote the evaporation of liquids which are present in the decantation chamber (6).

8. A system according to any of claims 5 to 7, **characterized in that** said lower portion (7a) of the body (7) is formed in one piece with the upper wall (1a) of the tank (1) on its face facing the outside of the tank (1).

9. A system according to any of claims 5 to 7, **characterized in that** the hollow body (7) is fixed to a support structure (8) formed in one piece with the upper wall (1a) of the tank (1), on its face facing towards the inside of the tank (1).

10. A system according to any of claims claim 5 to 9, **characterized in that** said valve device comprises a goose-beak relief valve (37) including a pair of normally closed flexible lips, adapted to open in order to let the fuel which is present in said collection seat (35) drop inside the tank (1) when conditions of over-pressure occur upstream the goose-beak relief valve (37).

11. A system according to claim 10, **characterized in that** the goose-beak relief valve (37) extends towards the inside of the tank (1) within a tubular body (39) having an axial extension greater than that of the goose-beak relief valve (37), in order to prevent the fuel from flowing back from the tank (1) to the hollow body (7) of the evaporator unit (5).

12. A system according to any of claims 3 to 11, **characterized in that** the body (7) of the evaporator unit (5) is associated to the upper wall (1a) of the tank (1) in a substantially central position thereof.

13. A system according to claim 8, **characterized in that** the body (7) of the evaporator unit (5) is rigidly connected to the upper wall (1a) of the tank (1).

14. A system according to claim 13, **characterized in that** said service ducts (11a, 11b) are associated to the face of the upper wall (1a) of the tank (1) facing the inside of the tank.

15. A system according to claim 13 or 14, **characterized in that** a portion of the body (7) of the evaporator unit (5) is formed in one piece with the upper wall (1a) of the tank (1).

16. A system according to claim 15, **characterized in that** the lower part (7a) of the body (7) of the evaporator unit (5) is formed integrally with the upper wall (1a) of the tank (1), on its face facing the outside of the tank (1).

17. A system according to claim 14, **characterized in that** the evaporator unit (5) is suspended from a support structure (8) formed integrally with the upper wall (1a) of the tank (1), on the side of its face facing the inside of the tank (1).

18. A system according to any of claims 1 to 17, **characterized in that** it comprises at least a pair of on-off float valves (15a, 15b) which are spaced from the evaporator unit (5), each of such valves (15a, 15b) having a body (16a, 16b) which slidably supports the respective float (17a, 17b), wherein at least the body (16a, 16b) of one of the float valves (15a, 15b) is formed integrally with the upper wall (1a) of the tank (1).

19. A system according to claim 18, **characterized in that** each on-off float valve (15a, 15b) comprises pipe fitting means (13a, 13b) of an associated service duct (11a, 11b) interposed between the same valve and the evaporator unit (5), wherein such pipe fitting means (13a, 13b) are formed integrally with the upper wall (1a) of the tank (1).

20. A system according to any of claims 3 to 19, **characterized in that** the activated carbon trap (42) is connected to the upper wall (1a) of the tank (1) by connection means (40; 8) integral with such upper wall (1a).

21. A system according to claim 20, **characterized in that** the activated carbon trap (42) is received in a hollow seat (40) formed in the upper wall (1a) of the tank (1) and having its cavity facing the outside of the tank (1).

22. A system according to claim 20, **characterized in that** the activated carbon trap (42) is contained in a sealed body fixed to the upper wall (1a) of the tank (1) on its face facing the inside of the tank (1).

23. A system according to claim 22, **characterized in that** the activated carbon trap (42) is suspended from the support structure (8) to which the body (7) of the evaporator unit (5) is connected.

24. A system according to any of claims 1 to 23, **characterized in that** the upper wall (1a) of the tank (1) is made of moulded plastic material.

25. A system according to claim 24, **characterized in that** the upper wall (1a) of the tank (1) is part of an upper half-shell of the tank (1), such upper half-shell being sealingly connected with a lower half-shell (2) of the tank, which is also made of moulded plastic material.

26. A fuel tank comprising a system for recovering fuel vapours according to any of claims 1 to 25.

## Patentansprüche

1. System zur Rückgewinnung von Kraftstoffdämpfen aus einem Kraftfahrzeugtank, umfassend eine Verdampfereinheit (5) mit einem Hohlkörper (7), der an eine obere Wand (1a) des Kraftstofftanks (1) angebaut und über Versorgungsleitungen (11a, 11b) mit dem Innenraum des Tanks (1) verbunden ist, **dadurch gekennzeichnet, dass** die Vorsorgungsleitungen (11a, 11b) die Verbindung des Innenraums des Hohlkörpers (7) der Verdampfereinheit (5) mit Bereichen des Tanks (1) ermöglichen, die entfernt von der Verdampfereinheit (5) angeordnet sind, und dass die Versorgungsleitungen (11a, 11b) innerhalb des Tanks (1) unter seiner oberen Wand (1a) angebracht sind.

2. System nach Anspruch 1, **dadurch gekennzeichnet, dass** den Versorgungsleitungen (11a, 11b) jeweils ein Absperrventil (15a, 15b) zugeordnet ist.

3. System nach Anspruch 1 oder 2, **dadurch gekennzeichnet, dass** der Hohlkörper (7) der Verdampfereinheit (5) eine im wesentlichen abgeflachte Form hat und eine Dekantierkammer (6) bildet, in die wenigstens eine Versorgungsleitung (11a, 11b) mündet, die mit dem Innenraum des Kraftstofftanks (1) verbunden ist, wobei der Hohlkörper (7) mit einem Entgasungsventil (25) ausgestattet ist, das zwischen der Dekantierkammer (6) und einer Zugangsleitung (23) liegt, die mit einem Aktivkohle- Abscheider (42) verbunden ist.

4. System nach Anspruch 3, **dadurch gekennzeichnet, dass** dem Entgasungsventil (25) ein Überschlag- Sicherheitsventil (31) zugeordnet ist.

5. System nach Anspruch 3 oder 4, **dadurch gekennzeichnet, dass** die Verdampfereinheit (5) aus einem unteren Teil (7a) und einem oberen Teil (7b) besteht, die miteinander verbunden sind, wobei der untere Teil (7a) des Hohlkörpers (7) einen Sammelsitz (35) für die Aufnahme von flüssigem Kraftstoff hat, welcher oberhalb einer Ventilvorrichtung (37) für die Rückführung des flüssigen Kraftstoffs in den Tank (1) angeordnet ist.

6. System nach einem der Ansprüche 3 bis 5, **dadurch gekennzeichnet, dass** die Dekantierkammer (6) wenigstens zwei Hilfskammern hat, wobei in jede Hilfskammer wenigstens eine zugehörige Versorgungsleitung (11a, 11b) mündet, die mit dem Innenraum des Tanks (1) verbunden ist.

7. System nach Anspruch 6, **dadurch gekennzeichnet, dass** jede Hilfskammer (6a, 6b) mehrere Querwände (20) hat, die eine Labyrinthstrecke für die Dämpfe zwischen der zugehörigen Versorgungsleitung (11a, 11b) und dem Entgasungsventil (25) bilden, um die Verdampfung der Flüssigkeiten innerhalb der Dekantierkammer (6) zu begünstigen.

8. System nach einem der Ansprüche 5 bis 7, **dadurch gekennzeichnet, dass** der untere Teil (7a) des Hohlkörpers (7) einstückig mit der oberen Wand (1a) des Kraftstofftanks (1) auf der Seite ausgebildet ist, die zur Außenseite des Tanks (1) weist.

9. System nach einem der Ansprüche 5 bis 7, **dadurch gekennzeichnet, dass** der Hohlkörper (7) an einer Tragstruktur (8) befestigt ist, die einstückig mit der oberen Wand (1a) des Kraftstofftanks (1) auf der Seite ausgebildet ist, die zur Innenseite des Tanks (1) weist.

10. System nach einem der Ansprüche 5 bis 9, **dadurch gekennzeichnet, dass** die Ventilvorrichtung aus einem schnabelförmigen Überdruckventil (37) mit einem Paar normalerweise geschlossener, flexibler Lippen besteht, die bei einem Überdruck vor dem schnabelförmigen Überdruckventil (37) öffnen, so dass der Kraftstoff, der sich in dem Sammelsitz (35) befindet, in den Tank (1) tropfen kann.

11. System nach Anspruch 10, **dadurch gekennzeichnet, dass** sich das schnabelförmige Überdruckventil (37) innerhalb eines rohrförmigen Körpers (39) zum Innenraum des Tanks (1) hin erstreckt, wobei der rohrförmige Körper (39) eine axiale Länge hat, die größer als diejenige des schnabelförmigen Überdruckventils (37) ist, wodurch ein Rückfluss des Kraftstoffs aus dem Tank (1) in den Hohlkörper (7) der Verdampfereinheit (5) verhindert wird.

12. System nach einem der Ansprüche 3 bis 11, **dadurch gekennzeichnet, dass** der Hohlkörper (7) der Verdampfereinheit (5) in einer im wesentlichen zentralen Position mit der oberen Wand (1a) des Tanks (1) verbunden ist.

13. System nach Anspruch 8, **dadurch gekennzeichnet, dass** der Hohlkörper (7) der Verdampfereinheit (5) fest mit der oberen Wand (1a) des Tanks (1) verbunden ist.

14. System nach Anspruch 13, **dadurch gekennzeichnet, dass** die Versorgungsleitungen (11a, 11b) derjenigen Seite der oberen Wand (1a) des Tanks (1) zugeordnet sind, die in den Innenraum des Tanks weist.

15. System nach Anspruch 13 oder 14, **dadurch gekennzeichnet, dass** ein Teil des Hohlkörpers (7) der Verdampfereinheit (5) einstückig mit der oberen Wand (1a) des Tanks (1) ausgebildet ist.

16. System nach Anspruch 15, **dadurch gekennzeichnet, dass** der untere Teil (7a) des Hohlkörpers (7) der Verdampfereinheit (5) einstückig mit der oberen Wand (1a) des Tanks (1) auf derjenigen Seite ausgebildet ist, die zur Außenseite des Tanks (1) weist.

17. System nach Anspruch 14, **dadurch gekennzeichnet, dass** die Verdampfereinheit (5) an einer Tragstruktur (8) hängt, die einstückig mit der oberen Wand (1a) des Tanks (1) auf derjenigen Seite ausgebildet ist, die zum Innenraum des Tanks (1) weist.

18. System nach einem der Ansprüche 1 bis 17, **gekennzeichnet durch** wenigstens ein Paar von Absperrventilen (15a, 15b) mit Schwimmern, die einen Abstand zu der Verdampfereinheit (5) haben, wobei jedes Absperrventil (15a, 15b) aus einem Körper (16a, 16b) besteht, in dem ein Schwimmer (17a, 17b) verschiebbar aufgenommen ist, wobei wenigstens der Körper (16a, 16b) eines der Absperrventile (15a, 15b) einstückig mit der oberen Wand (1a) des Tanks (1) ausgebildet ist.

19. System nach Anspruch 18, **dadurch gekennzeichnet, dass** jedes Absperrventil (15a, 15b) Rohranschlussmittel (13a, 13b) für eine zugeordnete Versorgungsleitung (11a, 11b) hat, die zwischen das Absperrventil (15a, 15b) und die Verdampfereinheit (5) eingesetzt ist, wobei die Rohranschlussmittel (13a, 13b) einstückig mit der oberen Wand (1a) des Tanks (1) ausgebildet sind.

20. System nach einem der Ansprüche 3 bis 19, **dadurch gekennzeichnet, dass** der Aktivkohle- Abscheider (42) mit der oberen Wand (1a) des Tanks (1) durch Verbindungsmittel (40; 8) verbunden ist, die einstückig mit der oberen Wand (1a) ausgebildet sind.

21. System nach Anspruch 20, **dadurch gekennzeichnet, dass** der Aktivkohle- Abscheider (42) in einem hohlen Sitz (40) in der oberen Wand (1a) des Tanks (1) untergebracht ist, wobei der Hohlraum des Sitzes (40) zur Außenseite des Tanks (1) hin gerichtet ist.

22. System nach Anspruch 20, **dadurch gekennzeichnet, dass** der Aktivkohle- Abscheider (42) in einem abgeschlossenen Körper untergebracht ist, der an der oberen Wand (1a) des Tanks (1) auf der Seite befestigt ist, die zum Innenraum des Tanks (1) weist.

23. System nach Anspruch 22, **dadurch gekennzeichnet, dass** der Aktivkohle- Abscheider (42) an der Tragstruktur (8) hängt, mit der der Hohlkörper (7) der Verdampfereinheit (5) verbunden ist.

24. System nach einem der Ansprüche 1 bis 23, **dadurch gekennzeichnet, dass** die obere Wand (1a) des Kraftstofftanks (1) aus einem Kunststoffspritzteil besteht.

25. System nach Anspruch 24, **dadurch gekennzeichnet, dass** die obere Wand (1a) des Tanks (1) Teil einer oberen Gehäusehälfte des Tanks (1) ist, die dicht mit einer unteren Gehäusehälfte (2) des Tanks (1) verbunden ist und ebenfalls aus einem Kunststoffspritzteil besteht.

26. Kraftstofftank mit einem System zur Rückgewinnung von Kraftstoffdämpfen nach einem der Ansprüche 1 bis 25.

## Revendications

1. Système de récupération de vapeurs de carburant d'un réservoir de véhicule à moteur, comprenant un évaporateur (5) ayant un corps creux (7) qui est associé à une paroi supérieure (1a) du réservoir (1) et communique avec l'intérieur du réservoir (1) par l'intermédiaire de conduites d'entretien (11a, 11b),
**caractérisé en ce que** lesdites conduites d'entretien (11a, 11b) permettent la communication de l'intérieur du corps (7) de l'évaporateur (5) avec des zones du réservoir (1) qui sont éloignées de l'évaporateur (5), et **en ce que** lesdites conduites d'entretien (11a, 11b) sont agencées à l'intérieur du réservoir (1) sous sa paroi supérieure (1a).

2. Système selon la revendication 1, **caractérisé en ce qu'**une soupape à flotteur ouverte/fermée (15a, 15b) est associée auxdites conduites d'entretien (11a, 11b).

3. Système selon la revendication 1 ou 2, **caractérisé en ce que** le corps (7) de l'évaporateur (5) a une forme globalement plate qui définit une chambre de décantation (6) dans laquelle au moins une conduite d'entretien (11a, 11b) communiquant avec l'intérieur du réservoir (1) s'ouvre, dans lequel le corps creux (7) comprend une soupape d'aération (25) interposée entre la chambre de décantation (6) et une conduite de distribution (23) communiquant avec un filtre à charbon actif (42).

4. Système selon la revendication 3, **caractérisé en ce qu'**une soupape de sûreté en cas de retournement (31) est associée à la soupape d'aération (25).

5. Système selon la revendication 3 ou 4, **caractérisé en ce que** l'évaporateur (5) comprend une partie inférieure (7a) et une partie supérieure (7b) couplées l'une à l'autre, la partie inférieure (7a) du corps creux (7) comprenant un siège (35) pour collecter le carburant à l'état liquide, ledit siège (35) étant agencé au-dessus d'un dispositif de soupape (37) pour renvoyer à nouveau le carburant liquide vers l'intérieur du réservoir (1).

6. Système selon l'une quelconque des revendications 3 à 5, **caractérisé en ce que** la chambre de décantation (6) comprend au moins deux chambres auxiliaires dans chacune desquelles s'ouvre au moins une conduite d'entretien respective (11a, 11b) communiquant avec l'intérieur du réservoir (1).

7. Système selon la revendication 6, **caractérisé en ce que** chaque chambre auxiliaire (6a, 6b) a une pluralité de plaques transversales (20) adaptées pour définir un chemin tortueux pour les vapeurs entre une conduite d'entretien associée (11a, 11b) et ladite soupape d'aération (25), et pour favoriser l'évaporation des liquides qui sont présents dans la chambre de décantation (6).

8. Système selon l'une quelconque des revendications 5 à 7, **caractérisé en ce que** ladite partie inférieure (7a) du corps (7) est formée d'une seule pièce avec la paroi supérieure (1a) du réservoir (1) sur sa face orientée vers l'extérieur du réservoir (1).

9. Système selon l'une quelconque des revendications 5 à 7, **caractérisé en ce que** le corps creux (7) est fixé à une structure de support (8) formée d'une seule pièce avec la paroi supérieure (1a) du réservoir (1), sur sa face orientée vers l'intérieur du réservoir (1).

10. Système selon l'une quelconque des revendications 5 à 9, **caractérisé en ce que** ledit dispositif de soupape comprend une soupape de décharge à bec de canard (37) comprenant une paire de lèvres flexibles normalement fermées, adaptées pour s'ouvrir afin de laisser le carburant qui est présent dans ledit siège de collecte (35) couler dans le réservoir (1) lorsque des conditions de surpression apparaissent en amont de la soupape de décharge à bec de canard (37).

11. Système selon la revendication 10, **caractérisé en ce que** la soupape de décharge à bec de canard (37) s'étend vers l'intérieur du réservoir (1) dans un corps tubulaire (39) ayant une extension axiale supérieure à celle de la soupape de décharge à bec de canard (37), afin d'empêcher le carburant de s'écouler à nouveau du réservoir (1) au corps creux (7) de l'évaporateur (5).

12. Système selon l'une quelconque des revendications 3 à 11, **caractérisé en ce que** le corps (7) de l'évaporateur (5) est associé à la paroi supérieure (1a) du réservoir (1) dans une position sensiblement centrale de celle-ci.

13. Système selon la revendication 8, **caractérisé en ce que** le corps (7) de l'évaporateur (5) est raccordé de manière rigide à la paroi supérieure (1a) du réservoir (1).

14. Système selon l'une quelconque des revendications 13, **caractérisé en ce que** lesdites conduites d'entretien (11a, 11b) sont associées à la face de la paroi supérieure (1a) du réservoir (1) orienté vers l'intérieur du réservoir.

15. Système selon la revendication 13 ou 14, **caractérisé en ce qu'**une partie du corps (7) de l'évaporateur (5) est formée d'une seule pièce avec la paroi supérieure (1a) du réservoir (1).

16. Système selon la revendication 15, **caractérisé en ce que** la partie inférieure (7a) du corps (7) de l'évaporateur (5) est formée de manière solidaire avec la paroi supérieure (1a) du réservoir (1), sur sa face orientée vers l'extérieur du réservoir (1).

17. Système selon la revendication 14, **caractérisé en ce que** l'évaporateur (5) est suspendu à partir d'une structure de support (8) formée de manière solidaire avec la paroi supérieure (1a) du réservoir (1), sur le côté de sa face orientée vers l'intérieur du réservoir (1).

18. Système selon l'une quelconque des revendications 1 à 17, **caractérisé en ce qu'**il comprend au moins une paire de soupapes à flotteur ouvertes/fermées (15a, 15b) qui sont espacées de l'évaporateur (5), chacune de ces soupapes (15a, 15b) ayant un corps (16a, 16b) qui supporte de manière coulissante le flotteur respectif (17a, 17b), dans lequel au moins le corps (16a, 16b) de l'une des soupapes à flotteur (15a, 15b) est formé de manière solidaire avec la paroi supérieure (1a) du réservoir (1).

19. Système selon la revendication 18, **caractérisé en ce que** chaque soupape à flotteur ouverte/fermée (15a, 15b) comprend des moyens de raccord de tuyaux (13a, 13b) d'une conduite d'entretien associée (11a, 11b) interposés entre cette même soupape et l'évaporateur (5), dans lequel ces moyens de raccord de tuyaux (13a, 13b) sont formés de manière solidaire avec la paroi supérieure (1a) du réservoir (1).

20. Système selon l'une quelconque des revendications 3 à 19, **caractérisé en ce que** le filtre à charbon actif (42) est raccordé à la paroi supérieure (1a) du réservoir (1) par des moyens de raccordement (40 ; 8) solidaires de cette paroi supérieure (1a).

21. Système selon la revendication 20, **caractérisé en ce que** le filtre à charbon actif (42) est reçu dans un siège creux (40) formé dans la paroi supérieure (la) du réservoir (1) et ayant sa cavité orientée vers l'extérieur du réservoir (1).

22. Système selon la revendication 20, **caractérisé en ce que** le filtre à charbon actif (42) est contenu dans un corps étanche fixé à la paroi supérieure (la) du réservoir (1) sur sa face orientée vers l'intérieur du réservoir (1).

23. Système selon la revendication 22, **caractérisé en ce que** la filtre à charbon actif (42) est suspendu à partir de la structure de support (8) à laquelle le corps (7) de l'évaporateur (5) est raccordé.

24. Système selon l'une quelconque des revendications 1 à 23, **caractérisé en ce que** la paroi supérieure (1a) du réservoir (1) est constituée de matière plastique.

25. Système selon la revendication 24, **caractérisé en ce que** la paroi supérieure (1a) du réservoir (1) fait partie d'une demi-coque supérieure du réservoir (1), cette demi-coque supérieure étant raccordée de manière étanche à une demi-coque inférieure (2) du réservoir, qui est également constituée de matière plastique.

26. Réservoir de carburant comprenant un système pour récupérer des vapeurs de carburant selon l'une quelconque des revendications 1 à 25.
